# EUROPÄISCHE PATENTANMELDUNG

(11) **EP 0 570 664 A2**
(43) Veröffentlichungstag der Anmeldung: **24.11.1993**
(21) Anmeldenummer: 93101541.6
(22) Anmeldetag: 02.02.1993
(51) Int. Cl.: H04M 15/00

(54) **Schaltungsanordnung zum Einspeisen von Gebührenimpulsen auf einer Anschlussleitung für ein Telekommunikations-Endgerät**

(30) Priorität: 20.05.1992 DE 4216577
(71) Anmelder: BOSCH TELECOM ÖFFENTLICHE VERMITTLUNGSTECHNIK GmbH, 65760 Eschborn (DE)
(72) Erfinder: Volk, Thomas, W-6305 Buseck 1 (DE)

(57) **Zusammenfassung**

Das Einspeisen von Gebührenimpulsen auf Anschlußleitungen für Telekommunikations-Endgeräte soll störungsfrei durchgeführt werden, ohne daß Induktivitäten, bzw. Wickelgüter erforderlich sind. Die Schaltungsanordnung soll so ausgelegt sein, daß sich ihre Bestandsteile in integrierten Schaltkreisen zusammenfassen lassen.

Der Anschaltimpuls zum Senden eines Gebührenimpulses wird durch einen RC-Tießpaß zu einer Hüllkurve geformt, die nach einer e-Funktion ansteigt und abfällt. Mit einem Amplitudenmodulator wird der so geformte Anschaltimpuls mit der Frequenz des Gebührenimpulses verknüpft. Am Ausgang des Amplitudenmodulators ist ein Tiefpaßfilter angeschlossen, welches alle bei einer Rechteckschwingung vorhandenen Oberwellen sperrt. Mit einem nachgeschalteten Analog-Addierer wird das dann sinusförmige Signal des Gebührenimpulses dem analogen niederfrequenten Nutzsignal überlagert.

## Beschreibung

Die Erfindung betrifft eine Schaltungsanordnung zum Einspeisen von Gebührenimpulsen auf einer Anschlußleitung für ein Telekommunikations-Endgerät nach dem Oberbegriff des Patentanspruchs 1.

Aus der Europäischen Patentschrift 0 206 279 ist eine Schaltungsanordnung zur geräuscharmen Einspeisung von Impulsen aus einer sinusförmigen Wechselspannung, insbesondere von 16-kHz-Gebührenimpulsen bekannt. Hierzu ist ein MOS-FET-Schalter vorgesehen, dessen Steuereingang mit einem RC-Parallel-Glied beschaltet ist. Dieser Schalter verbindet eine zentrale Wechselspannungsquelle jeweils dann mit einer Wicklung eines Leitungsübertragers, wenn ein Gebührenimpuls eingespeist werden soll. Durch die Beschaltung des Steuereingangs des MOS-FET-Schalters wird eine sogenannte weiche Tastung des Schalters erreicht, d.h., durch entsprechend langsam vor sich gehende Auf- und Entladung des Kondensators werden die Anstiegszeit und Abfallzeit des Impulsflanken verlangsamt. Damit sollen Geräuschstörungen, welche sich beim Einspeisen von Impulsen ergeben könnten, vermieden werden.

Aus der Abbildung und der Beschreibung in der Europäischen Patentschrift 0 026 279 ist zu entnehmen, daß außer dem Schalter noch ein Bandpaß, eine Bandsperre sowie ein Übertrager für die Ankopplung des Gebührenimpuls-Schalters an eine Anschlußleitung notwendig. Für diese Bauteile sind, wie aus der Zeichnung hervorgeht, Induktivitäten erforderlich, welche einen erheblichen Platzbedarf haben und nicht integriert werden können. Außerdem muß am Übertrager ein besonderer Abgriff vorgesehen sein, woran der Gebührenimpuls-Schalter angeschlossen werden kann.

Ausgehend vom vorgenannten Stand der Technik besteht die Aufgabe der Erfindung darin, eine Schaltungsanordnung anzugeben, womit Gebührenimpulse auf Anschlußleitungen für Telekommunikations-Engeräte geschaltet werden können, ohne daß Induktivitäten, bzw. Wickelgüter erforderlich sind. Die Schaltungsanordnung soll so ausgelegt sein, daß sich ihre Bestandteile in integrierten Schaltkreisen zusammenfassen lassen.

Zur Lösung dieser Aufgabe ist eine Merkmalskombination vorgesehen, wie sie im Patentanspruch 1 angegeben ist.

Damit wird in vorteilhafter Weise erreicht, daß bei der störungsfreien Einspeisung von Gebührenimpulsen keine Induktivitäten erforderlich sind, und somit nur ein geringer Platzbedarf gegeben ist, weil integrierte Schaltkreise anwendbar sind. Es sind keine Bandpässe notwendig, die auf die Frequenz des Gebührenimpulses abgestimmt werden müßten. Außerdem kann bei der Schaltungsanordnung als frequenzbestimmende Einheit auch ein Rechteckgenerator verwendet werden.

Ein Ausführungsbeispiel der Erfindung wird nachfolgend anhand von Zeichnungen näher erläutert.

Es zeigt
- Figur 1: ein Blockschaltbild der gesamten Anordnung mit zugehörigen Impulsbildern
- Figur 2: ein detailiertes Schaltbild

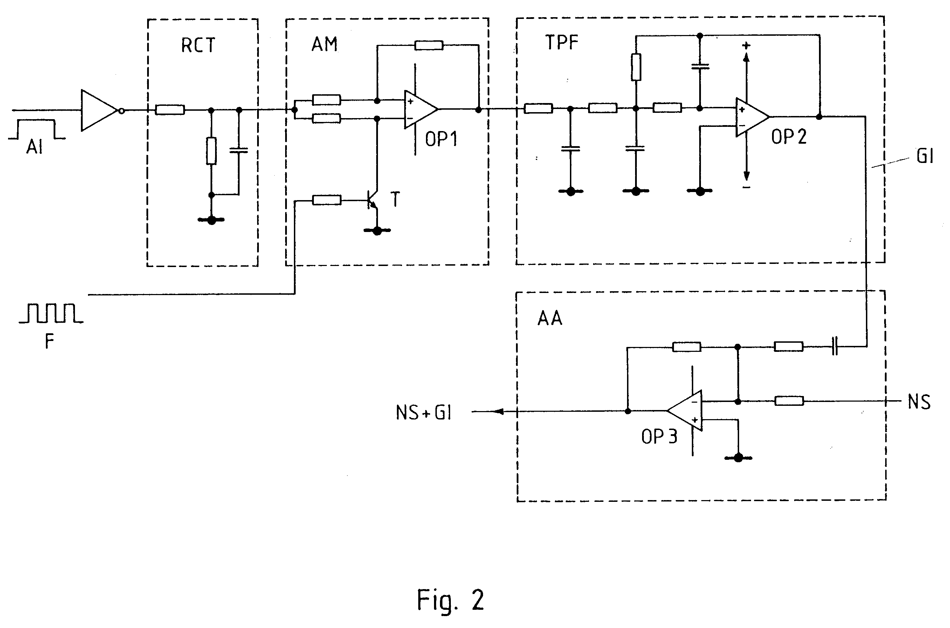

Ein Anschaltimpuls AI, der immer dann auftritt, wenn ein Gebührenimpuls GI eingespeist werden soll, wird dem Eingang eines RC-Tiefpasses RCT zugeführt. Dieser RC-Tiefpaß RCT besteht, wie Figur 2 ersichtlich ist, aus einer Serienschaltung eines Widerstandes mit einem Kondensator. Am Ausgang des RC-Tiefpasses RCT erscheint eine Hüllkurve HK, welche nicht mehr die Rechteckform des Anschaltimpulses AI hat sondern einer e-Funktion folgend allmählich ansteigt und abfällt.

An den Ausgang des RC-Tiefpasses RCT ist der Eingang eines Amplitudenmodulators AM geschaltet. Ein weiterer Eingang des Amplitudenmodulators AM ist mit einem Generator G verbunden, welcher die Frequenz F des Gebührenimpulses erzeugt. Diese Frequenz F erscheint am Ausgang des Amplitudenmodulators AM mit jeweils einer durch die Hüllkurve HK vorgegebenen Amplitude.

Der Ausgang des Amplitudenmodulators AM ist mit einem Tiefpaßfilter TPF verbunden, welches die Aufgabe hat, die steilen Flanken des vom Amplitudenmodulator AM gelieferten Signals zu glätten. Es entsteht also am Ausgang des Tiefpaßfilters TPF ein Gebührenimpuls GI welcher die Form einer ansteigenden und abklingenden Sinusschwingung hat. Da der Ausgang des Tiefpaßfilters TPF mit einem Eingang eines Analog-Addierers AA verbunden ist, der am seinem anderen Eingang das analoge niederfrequente Nutzsignal NS zugeführt bekommt, entsteht innerhalb des Analog-Addierers AA ein Signal, bei dem der Gebührenimpuls GI dem analogen niederfrequenten Nutzsignal NS überlagert ist. Dieses Signal NS+GI gelangt auf die Anschlußleitung AL zu einem daran angeschlossenen Endgerät EG.
Durch diese Art der Einspeisung eines Gebührenimpulses GI wird erreicht, daß keinerlei Übertragungsstörungen auftreten. Dies trifft auch dann zu, wenn anstelle eines Fernsprechapparates beispielsweise ein Fernkopiergerät oder eine andere digitale Einrichtung in Betrieb ist.

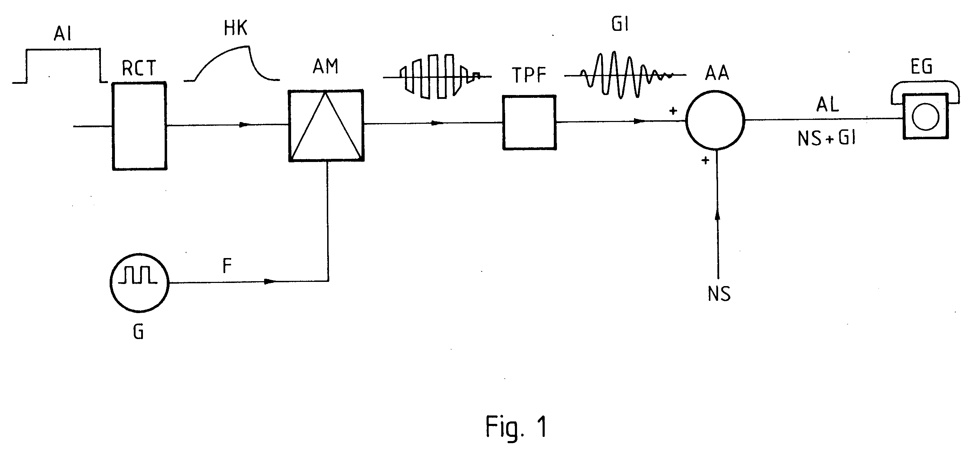

Das in Figur 2 gezeigte Schaltbild gibt an, wie die einzelnen Teile der gesamten Schaltungsanordnung miteinander verbunden sind. Der Ansteuerimpuls AI wird durch die Zeitkonstante des Kondensators im RC-Tiefpaß RCT so verformt, wie dies zeichnerisch in Figur 1 dargestellt ist. Dieser Impuls wird an die Eingänge eines Operationsverstärkers OP1 geschaltet, welcher als schaltbarer Differenzverstärker (Verstärkungsfaktor +1/-1) betrieben wird, wobei über einen Transistor T die Frequenz F des Gebührenimpulses an einen der Eingänge geschaltet wird. Am Ausgang des Operationsverstärkers OP1, und damit am Ausgang des Amplitudenmodulators AM entsteht eine Rechteckschwingung mit einer Hüllkurve HK, wie dies in Figur 1 dargestellt ist.

Dieses Signal wird einem Tiefpaßfilter TPF zugeführt, welches aus einem Operationsverstärker OP2 besteht, der an seinen Eingängen und Ausgängen mit Widerständen und Kondensatoren beschaltet ist. Es ergibt sich dadurch ein aktiver Tiefpaß dritter Ordnung, womit die Kurvenform des Eingangssignals so abgewandelt wird, daß eine nach einer e-Funktion ansteigende und abklingende Sinusschwingung entsteht.

Das am Ausgang des Operationsverstärkers OP2 im aktiven Tiefpaßfilter TPF entstehende Signal des Gebührenimpulses GI wird nun dem Analog-Addierer AA zugeführt. Dieser Analog-Addierer AA besteht aus einem Operationsverstärker OP3 an dessen einem Eingang das Nutzsignal NS und der wie zuvor beschrieben geformte Gebührenimpuls GI zusammengeschaltet sind. Es entsteht dadurch am Ausgang des Operationsverstärkers OP3 ein Ausgangssignal wobei der Gebührenimpuls GI dem Nutzsignal NS überlagert ist. Dieses Signal wird dann über die Anschlußleitung AL zu einem Endgerät EG gesendet.

## Patentansprüche

1. Schaltungsanordnung zum Einspeisen von Gebührenimpulsen auf eine Anschlußleitung für ein Telekommunikations-Endgerät, wobei die Gebührenimpulse mit einer Frequenz, die außerhalb des für Sprachfrequenzen vorgesehenen Bandes liegt, auf die Anschlußleitung geschaltet werden und innerhalb des Kommunikations-Endgerätes ausgewertet werden,
dadurch gekennzeicht,
daß der Anschaltimpuls (AI) zum Senden eines Gebührenimpulses (GI) über einen einfachen RC-Tiefpaß (RCT) geleitet wird, wobei eine Hüllkurve (HK) in Form einer e-Funktion entsteht,
daß ein Amplitudenmodulator (AM) vorgesehen ist, an dessen Eingänge der RC-Tiefpaß (RCT) und ein die Frequenz (F) des Gebührenimpulses (GI) erzeugender Generator (G) angeschlossen sind,
daß am Ausgang des Amplitudenmodulators (AM) ein Signal erscheint, in welchen die Frequenz (F) des Gebührenimpules (GI) mit der Hüllkurve (HK) verknüpft ist,
daß am Ausgang des Amplitudenmodulators (AM) ein Tiefpaßfilter (TPF) angeschlossen ist, welches alle bei einer Rechteckschwingung vorhandenen Oberwellen sperrt, und daß der Ausgang des Tiefpaßfilters (TPF) mit einem Analog-Addierer (AA) verbunden ist, womit der Gebührenimpuls (GI) dem analogen niederfrequenten Nutzsignal (NS) überlagert wird.

2. Schaltungsanordnung nach Anspruch 1,
dadurch gekennzeichnet,
daß als Amplitudenmodulator (AM) ein rückgekoppelter Operationsverstärker (OP1) verwendet wird, von dem ein Eingang mit der Frequenz (F) des Gebührenimpulses getastet wird.

3. Schaltungsanordnung nach Anspruch 1,
dadurch gekennzeichnet,
daß als Tiefpaßfilter (TPF) ein aktiver Tiefpaß dritter Ordnung mit einem Operationsverstärker (OP2) verwendet wird.

4. Schaltungsanordnung nach Anspruch1,
dadurch gekennzeichnet,
daß als Analog-Addierer (AA) ein rückgekoppelter Operationsverstärker (OP3) verwendet wird.
